# EUROPEAN PATENT APPLICATION

(11) **EP 3 477 268 A1**
(43) Date of publication of application: **01.05.2019**
(21) Application number: 17823823.4
(22) Date of filing: 05.04.2017
(51) Int. Cl.: G01J 1/02, G01J 1/06, G01J 5/06, G01J 5/12

(54) **INFRARED RAY DETECTOR AND RADIATION THERMOMETER**

(30) Priority: 04.07.2016 JP 2016132772
(71) Applicant: Horiba, Ltd., Kyoto-shi, Kyoto 601-8510 (JP)
(72) Inventor: FUJINO, Sho, Kyoto-shi Kyoto 601-8510 (JP)
(74) Representative: Isarpatent
(86) International application number: PCT/JP2017/014210
(87) International publication number: WO 2018/008215

(57) **Abstract**

A radiation thermometer is provided which achieves highly accurate temperature measurement even when subjected to large temperature variations in ambient environment by preventing entry, into an infrared sensor, of infrared rays emitted from a barrel and components disposed inside the barrel, and by reducing a temperature measurement error due to self-infrared rays. The radiation thermometer includes a barrel, an infrared sensor, a first aperture, an infrared absorption structure, and a reflection structure. The barrel includes an infrared inlet port formed on a front end thereof. The infrared sensor is disposed on the base end side so as to be opposite to the infrared inlet port in the barrel. The first aperture is disposed so as to divide between the infrared inlet port and the infrared sensor in the barrel. The infrared absorption structure is disposed on at least a part of an inner end surface on the base end side in the barrel or at least a part of an outer surface of the infrared sensor. The reflection structure is disposed on at least a part of an inner peripheral surface on the base end side than the first aperture in the barrel or at least a part of the first aperture which is located toward the infrared sensor.

## Description

### TECHNICAL FIELD

The present invention relates to an infrared detector which receives infrared rays radiated from a measurement object, converts the infrared rays to an electrical signal, and outputs the electrical signal. The present invention also relates to different types of devices using the infrared detector.

### BACKGROUND ART

An infrared detector used for a radiation thermometer includes a barrel whose tip is designed to open, and an infrared sensor disposed at a bottom part of the barrel. The infrared detector is designed to receive, by the infrared sensor, infrared rays radiated from a measurement object and entered from an opening at the tip of the barrel into the interior thereof.

Here, stray light becomes the cause of noise. The stray light is infrared rays which enter from the outside into the interior of the barrel through the opening at the tip of the barrel, and are then taken into the infrared sensor by, for example, being reflected in the barrel.

In order to prevent the stray light from entering the infrared sensor, for example, Patent Document 1 discloses one in which an inner peripheral surface of the barrel and a aperture are blackened so that the entered stray light can be absorbed by an inner surface of the barrel, the aperture, or the like.

Meanwhile, a conventional radiation thermometer has been often used based on satisfying preconditions that its own temperature is kept approximately constant. Recently, however, there is a desire to use the radiation thermometer even on a site subjected to large variations in ambient temperature environment.

However, because a temperature of the infrared detector itself constituting the radiation thermometer varies in the above use environment, intensity of infrared rays radiated from, for example, blackened parts for absorbing the stray light on the inner surface or the like of the barrel (hereinafter also referred to as "self-infrared rays") cannot be kept constant. If the self-infrared rays whose intensity varies enter the infrared sensor, it may cause a problem that a measured temperature drifts.

### PRIOR ART DOCUMENT

### Patent Document

Patent Document 1: Japanese Unexamined Patent Publication No. 2010-133869

### SUMMARY OF THE INVENTION

### Problems to be Solved by the Invention

The present invention has been made in view of the above problem, and has for its main object to provide an infrared detector capable of preventing entry, into an infrared sensor, of infrared rays emitted from a barrel and components disposed in the barrel. Means of Solving the Problems

Specifically, the infrared detector according to the present invention includes a barrel, a first aperture, an infrared sensor, an infrared absorption structure, and a reflection structure. The barrel includes an infrared inlet port formed on a front end. The first aperture is disposed so as to divide an interior of the barrel into the front end side and a base end side. The infrared sensor is disposed on the base end side than the first aperture in the barrel. The infrared absorption structure is disposed on at least a part of an inner end surface on the base end side in the barrel or at least a part of an outer surface of the infrared sensor. The reflection structure is disposed on at least a part of an inner peripheral surface on the base end side than the first aperture in the barrel or at least a part of the first aperture which is located toward the infrared sensor.

Here, the infrared absorption structure denotes a structure configured so that an amount of infrared rays absorbed is greater than an amount of infrared rays reflected. The reflection structure denotes a structure configured so that an amount of infrared rays reflected is greater than an amount of infrared rays absorbed. The infrared absorption structure may be disposed on either or both of the inner end surface on the base end side in the barrel, and the outer surface of the infrared sensor. The reflection structure may also be disposed on, for example, either or both of an inner peripheral surface on the base end side than the first aperture in the barrel, and the side of the first aperture which is located toward the infrared sensor.

With the above configuration, because of the first aperture, even when self-infrared rays radiated from the inner peripheral surface on the front end side than the first aperture in the barrel and from other members pass through the first aperture, the self-infrared rays do not directly enter the infrared sensor but enter the infracted absorption structure and are absorbed therein.

Additionally, the reflection structure is disposed on the inner peripheral surface on the base end side in the barrel in the vicinity of the infrared sensor, or on the side of the first aperture which is located toward the infrared, thereby ensuring that little or no self-infrared rays occur.

It is therefore possible to configure so that little or no self-infrared rays generated in the barrel enter the infrared sensor. Hence, for example, when a radiation thermometer is configured using the infrared detector of the present invention, temperature drift is less likely to occur even when the temperature of the infrared detector itself varies due to temperature variations in ambient environment, or even when the temperature of the infrared detector itself rises due to infrared rays from a measurement object. That is, the infrared detector according to the present invention achieves temperature measurement with higher accuracy than conventional ones even in use environment in which it is difficult to keep the temperature of the infrared detector itself constant.

In order that self-infrared rays generated on the front end side than the first aperture in the barrel can be sufficiently absorbed by the infrared absorption structure, the infrared absorption structure needs to be disposed at a position in which infrared rays radiated from the front end side than the first aperture in the barrel pass through the first aperture and reach an inner end surface on the base end side in the barrel or an outer surface of the infrared sensor. For example, the infrared absorption structure may be disposed at a position in which straight lines respectively connecting points on the inner peripheral surface on the front end side in the barrel and parts of an opening of the first aperture reach the inner end surface on the base end side of the barrel.

In order that stray light, which is infrared rays from beyond a field of view of the infrared sensor and enters from the infrared inlet port, is much less likely to enter the infrared sensor and thereby prevent the field of view of the infrared sensor from becoming blurry, it is preferable to further include a second aperture disposed so as to divide between the infrared inlet port and the first aperture in the interior of the barrel.

In order that self-infrared rays generated from a member for preventing stray light from entering the infrared sensor is less likely to enter the infrared sensor, the infrared absorption structure needs to be disposed at a position to ensure that infrared rays radiated from individual points of the second aperture which are located toward the infrared sensor pass through the opening of the first aperture and reach the inner end surface on the base end side in the barrel or the outer surface of the infrared sensor.

In order to further enhance the effect of removing stray light entering the barrel, an inner peripheral surface on the front end side than the first aperture in the barrel needs to be subjected to a surface treatment so as to absorb infrared rays.

In order that the infrared absorption structure can be disposed around the infrared sensor only by an assembly operation, the infrared absorption structure needs to be a black infrared absorption plate to cover the inner end surface on the base end side in the barrel or the outer surface of the infrared sensor.

In order that temperature gradient between the infrared sensor and the infrared absorption structure is reducible, and influence on temperature measurement is reducible, the infrared absorption structure needs to be a black infrared absorption plate to cover the inner end surface on the base end side in the barrel or the outer surface of the infrared sensor.

As a specific structure to make infrared rays less likely to be radiated from the first aperture in the vicinity of the infrared sensor or the inner peripheral surface of the barrel, the reflection structure may be a reflection film formed on the inner peripheral surface of the base end side than the first aperture in the barrel or on a side of the first aperture which is located toward the infrared sensor.

In order to make infrared rays less likely to be radiated only by surface treatment to a region which is in the vicinity of the infrared sensor and allows self-infrared rays to enter the infrared sensor, the reflection structure needs to obtained by applying mirror finish to the inner peripheral surface on the base end side than the first aperture in the barrel or to a side of the first aperture which is located toward the infrared sensor. In particular, when the mirror finish is applied to the inside of the barrel or the side of the first aperture which is located toward the infrared sensor, reflection rate can be further enhanced than the case of forming the reflection structure by using, for example, resin containing metal filler. It is therefore possible to considerably reduce an amount of generation of self-infrared rays on the base end side of the barrel, thereby further improving measurement accuracy, for example, when used as a radiation thermometer.

In order that even if a certain object generating high energy infrared rays, besides a measurement object, is present beyond the field of view of the infrared sensor, a measurement error or the like is avoidable by preventing the infrared rays emitted from the certain object from passing through a side surface of the optical filter and being detected by the thermopile element, the infrared sensor needs to include a thermopile element, a casing designed to accommodate the thermopile element therein, and a plate-shaped optical filter which is disposed so as to cover an opening formed in the casing and designed to permit passage of infrared rays in a predetermined wavelength range. A side surface of the optical filter needs to be covered with a metal film.

For example, when subjected to large temperature variations in ambient environment, accurate noncontact temperature measurement using infrared rays is achievable with a radiation thermometer including the infrared detector according to the present invention, and a temperature calculation section designed to calculate a temperature on the basis of an electrical signal outputted from the infrared sensor.

### Effects of the Invention

With the above infrared detector according to the present invention, the self-infrared rays generated from a region on the front end side than the first aperture in the barrel do not enter the infrared sensor by being absorbed by the infrared absorption structure in the vicinity of the infrared sensor. Additionally, in the vicinity of the infrared sensor, the reflection structure is disposed on a region other than the inner end surface on the base end side than the reflection structure, thereby ensuring that originally little or no self-infrared rays occur. Thus, the amount of self-infrared rays entering the infrared sensor can be made lower than that in conventional ones. For example, with the radiation thermometer using the infrared detector according to the present invention, temperature drift is less likely to occur even when the temperature of the infrared detector itself varies due to temperature variations in ambient environment and infrared rays from the measurement object. This leads to highly accurate temperature measurement in an environment in which it is difficult to keep the temperature of the infrared detector itself constant.

### BRIEF DESCRIPTION OF THE DRAWINGS

FIG. 1 is a schematic sectional view illustrating a radiation thermometer in a first embodiment of the present invention;

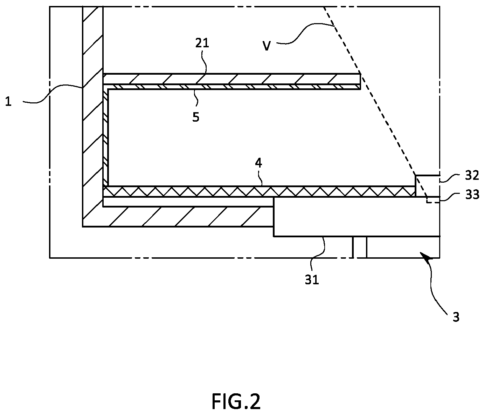

FIG. 2 is a schematic enlarged sectional view enlargedly illustrating the vicinity of an infrared sensor in the first embodiment;
FIG. 3 is a schematic diagram illustrating motion of self-infrared rays when no infrared absorption structure is disposed on an inner end surface of a barrel in the first embodiment;
FIG. 4 is a schematic sectional view illustrating a radiation thermometer in a second embodiment of the present invention;
FIG. 5 is an enlarged schematic sectional view illustrating details of an infrared sensor and an infrared absorption structure in the second embodiment;
FIG. 6 is a schematic sectional view illustrating one embodiment of a radiation thermometer in other embodiment using a mirror;
FIG. 7 is a schematic sectional view illustrating other embodiment of a radiation thermometer in other embodiment using a mirror;
FIG. 8 is a schematic sectional view illustrating a radiation thermometer in other embodiment of the present invention;
FIG. 9 is a top view of an inner end surface on a base end side of a barrel in other embodiment; and
FIG. 10 is a schematic diagram illustrating a structure of an infrared sensor in still another embodiment.

### Description of the Reference Numeral

- 200: radiation thermometer
- 100: infrared detector
- 1: barrel
- 11: infrared inlet port
- 12: lens
- 2: aperture structure
- 21: first aperture
- 22: second aperture
- 23: third aperture
- 3: infrared sensor
- 31: casing
- 32: filter
- 4: infrared absorption structure
- 5: reflection structure
- S1: inlet port-side space
- S2: sensor-side space
- TC: temperature calculation section
- V: field of view

### Mode for Carrying out the Invention

A radiation thermometer 200 (infrared thermometer, infrared radiometer) in a first embodiment of the present invention is described with reference to the drawings. The radiation thermometer 200 in the first embodiment is designed to be used on a site where ambient environmental temperature is not kept constant and there occurs a greater temperature change than conventional applications. The radiation thermometer 200 is configured so that a temperature of a measurement object can be measured in a non-contact manner on the basis of intensity of infrared rays radiated from the measurement object.

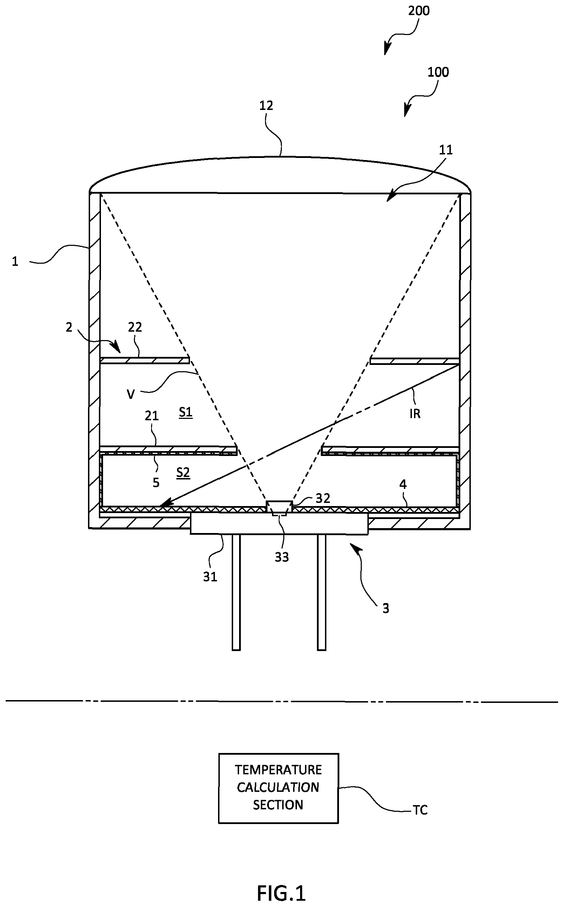

As illustrated in FIG. 1, the radiation thermometer 200 in the first embodiment includes an infrared detector 100 and a temperature calculation section TC to calculate a temperature of the measurement object on the basis of an electrical signal outputted from the infrared detector 100. The infrared detector 100 includes a metal cylindrical barrel 1 having an infrared inlet port 11 formed on a front end side thereof, an aperture mechanism 2 disposed in the barrel 1, and an infrared sensor 3 disposed on a base end side of the barrel 1. The temperature calculation section TC is, for example, a so-called computer including a CPU, memory, and an AD/DA converter. The temperature calculation section TC fulfills its function by cooperating with the infrared detector 100 during execution of a program stored in the memory. An electrical signal, which is outputted by the infrared sensor 3 according to an amount of infrared rays entered, is inputted to the temperature calculation section TC. The temperature calculation section TC is configured to calculate, as a temperature, the amount of infrared rays indicated by the electrical signal by a predetermined conversion formula, and then output a value of the temperature.

Components are described in detail below.

The barrel 1 has a cylindrical shape whose front end surface is opened to serve as the infrared inlet port 11, and whose base end surface is closed except for a portion to which the infrared sensor 3 is attached. A convex lens 12 is attached so as to close the infrared inlet port 11.

The aperture 2 includes a first aperture 21 disposed on the base end side of the barrel 1, and a second aperture 22 disposed on the front end side of the barrel 1. Each of the apertures is disposed so as to divide vertically relative to an axial direction of the barrel 1. The first aperture 21 is made smaller in opening diameter than the second aperture 22. Specifically, the first aperture 21 limits a field of view V of the infrared sensor 3, and determines a dimension of the field of view V that is a range in which infrared rays emitted from a measurement object can enter through the lens 12. Stray light in the barrel 1 is less likely to enter the infrared sensor 3 by disposing the first aperture 21 and the second aperture 22 side by side in the axial direction of the barrel 1 in the first embodiment.

Hereinafter, space on the front end side than the first aperture 21 in an internal space in the barrel 1 is referred to as an inlet-side space S1, and space on the base end side than the first aperture 21 is referred to as a sensor-side space S2.

The infrared sensor 3 includes a sensor (not illustrated) accommodated in a cylindrical casing 31, and an optical filter 32 disposed on a top surface of the casing 31. The infrared sensor 3 is disposed on the base end side in the barrel 1 so that a light receiving surface of the sensor element is located on an axis and directed to the infrared inlet port 11.

The sensor element is a thermal type one which detects, as a change in electromotive force, a temperature change when the sensor element absorbs infrared rays. A thermopile is used here, in which a large number of thermocouples are arranged in series and thinned. As the sensor element, other thermal sensor element, such as porometer or pyroelectric one, or alternatively a quantum sensor element may be used instead of the thermal sensor element.

The optical filter 32 is a band pass filter that permits passage of only light of a predetermined wavelength range (electromagnetic wave). The band pass filter that permits passage of only infrared rays in a wavelength range, for example, 8-14 µm is used here. It is configured so that only the infrared rays passing through the optical filter 32 are received by the sensor element. Because the wavelength range (8-14 µm) is a band in which infrared rays are less absorbed by the atmosphere, it is possible to reduce influence of absorption due to the atmosphere interposing between the measurement object and the infrared sensor 33 during a temperature measurement, thus leading to measurement with higher accuracy.

Additionally, an infrared absorption mechanism 4 or a reflection structure 5 is disposed on a surface constituting the sensor-side space S2 in the barrel 1 of the infrared detector 100 used for the radiation thermometer 200 in the first embodiment.

More specifically, the infrared absorption structure 4 is an infrared absorption plate laid so as to cover the entirety of a top surface except for the optical filter 32 in the infrared sensor 3, and the entirety of the inner end surface on the base end side of the barrel 1. In other words, the infrared absorption structure 4 is formed on the entirety of a region opposite to the first aperture 21 except for the optical filter 32. As a specific configuration of the infrared absorption plate, there is, for example, a metal plate to which black paint is applied, or a metal plate blackened by oxidation treatment. An amount of absorption of infrared rays entering the infrared absorption structure 4 is made greater than an amount of reflection of the infrared rays.

The reflection structure 5 is disposed on both of the inner peripheral surface of the barrel 1 which is in contact with the sensor-side space S2, and a surface of a partition plate constituting the first aperture 21 which is opposite to the infrared sensor 3. The reflection structure 5 in the first embodiment is a reflection film made of, for example, resin containing metal filler, and an amount of reflection of incident infrared rays is made greater than an amount of absorption thereof. In other words, the reflection structure 5 is configured to be less likely to absorb infrared rays and less likely to generate radiation than the infrared absorption structure 4.

A blackening treatment is applied to an inner peripheral surface of the barrel 1 being in contact with the inlet port-side space S1, and a surface of the second aperture 22 and a surface of the first aperture 21 which are opposite to the infrared inlet port, in order to absorb infrared rays entering as stray light.

In the first embodiment thus configured, the characteristic feature that the self-infrared rays IR being infrared rays radiated from the member of the inlet port-side space S1 is less likely to enter the infrared sensor 3 in the sensor-side space S2 is described comparing with a conventional embodiment.

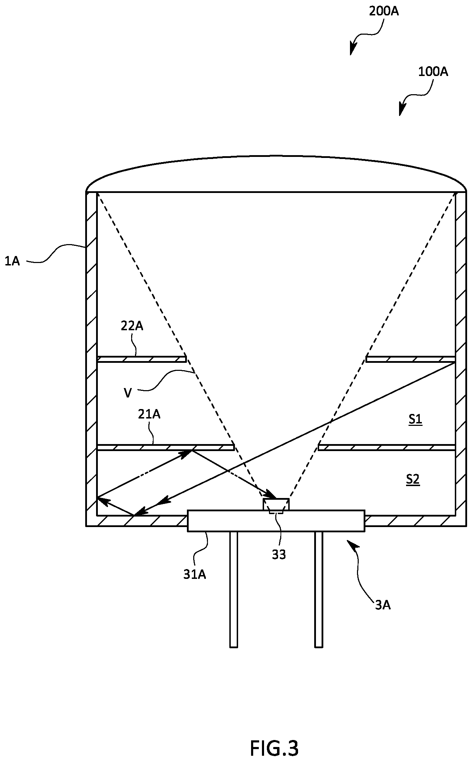

FIG. 3 illustrates a situation where an inner end surface on a base end side of a barrel 1A is not subjected to a blackening treatment or the like and a metal reflection surface is exposed, as in the case of a conventional radiation thermometer 200A. Specifically, neither an oxidation treatment nor any other blackening treatment has conventionally been applied to a casing 31A of an infrared sensor 3A in order to remove obstructions to metal bonding of a can and a stem that constitute the casing 31A when manufacturing an infrared sensor 3A.

In this case, for example, when self-infrared rays IR pass through a first aperture 21A by being emitted due to thermal radiation from a second aperture 22A subjected to the blackening treatment, the self-infrared rays may enter the infrared sensor 3A due to repeated reflections from a wall constituting the sensor-side space S2. That is, there has conventionally been disadvantages that temperature drift occurs and a field of vision V of the infrared sensor 3A is blurry due to the self-infrared rays IR entering from the outside of the field of view V.

With the radiation thermometer 200 in the first embodiment, even when self-infrared rays IR generated in the inlet port-side space S1 can pass through the first aperture 21 into the sensor-side space S2 as illustrated in FIG. 1, the self-infrared rays IR enter the infrared absorption structure 4 and are absorbed therein, causing no repeated reflections in the sensor-side space S2. Therefore, little or none of the self-infrared rays IR generated in the inlet port-side space S1 reaches the infrared sensor 3. Because the field of view V of the infrared sensor 3 is limited by the first aperture 21, the self-infrared rays IR radiated from the inner peripheral surface of the casing 31 located outside the field of view V and from the second aperture 22 do not directly enter the infrared sensor 3 without being subjected to reflection.

Even when self-infrared rays IR occur in the infrared absorption structure 4, they are directed in the same direction as the light receiving surface of the infrared sensor 3, and therefore, little or none of these self-infrared rays IR enters the infrared sensor 3.

Moreover, the reflection structure 5 is disposed at portions of the wall surface constituting the sensor-side space S2 which are not provided with the infrared absorption structure 4, and in fact, little or no self-infrared rays IR occur.

Accordingly, little or no self-infrared rays IR enter the infrared sensor 3, and only infrared rays from the outside which are radiated from a measurement object are allowed to enter the infrared sensor 3. Specifically, even when the ambient temperature of the radiation thermometer 200 changes and the amount of self-infrared rays increases or decreases, the infrared sensor 3 is less subject to temperature drift, noise, or the like. The radiation thermometer 200 in the first embodiment is therefore capable of carrying out a high-accuracy temperature measurement even when the temperature of the radiation thermometer 200 itself cannot be kept constant as in the case of conventional ones. That is, the radiation thermometer 200 in the first embodiment is suitable for a high-accuracy temperature measurement in a non-contact manner even when subjected to large temperature variations in ambient environment.

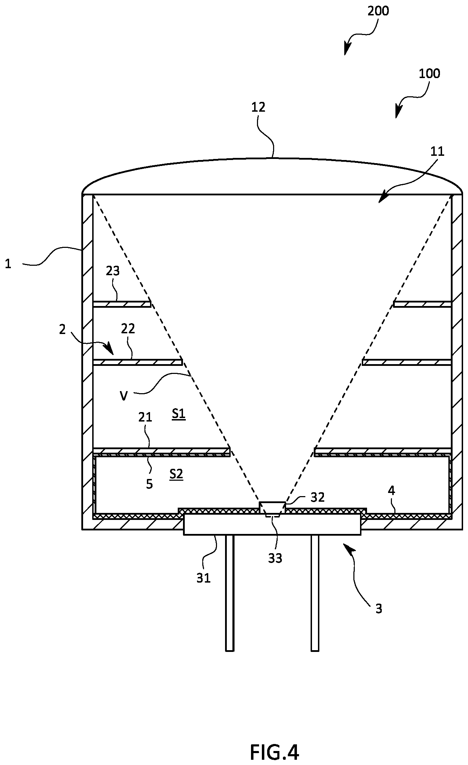

A second embodiment is described below with reference to FIG. 4. Members corresponding to the members described in the first embodiment are identified by the same reference numerals.

An infrared detector 100 of a radiation thermometer 200 in the second embodiment is different from that of the first embodiment in a aperture mechanism 2, an infrared absorption structure 4, and a reflection structure 5.

Components are described below.

The aperture mechanism 2 includes, besides a first aperture 21 and a second aperture 22, a third aperture 23 disposed between the second aperture 22 and an infrared inlet port 11. By so increasing the number of apertures, it becomes easier to prevent stray light from penetrating into a sensor-side space S2 and entering an infrared sensor 3.

Infrared absorption in the second embodiment is attainable by a blackening treatment of an outer surface of a casing 31 of an infrared sensor 3 and an inner end surface on a base end side of a barrel 1. An oxide film is formed as the blackening treatment. Alternatively, for example, black paint may be applied.

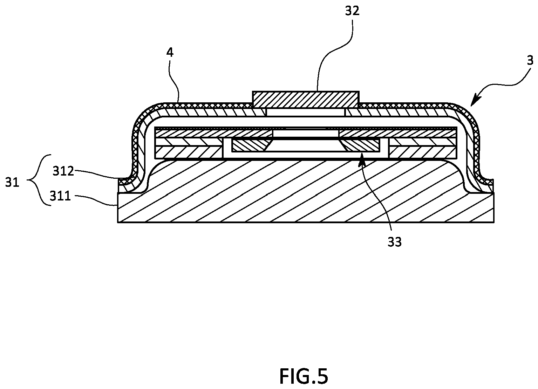

More specifically, as illustrated in a sectional view of the infrared sensor 3 in FIG. 5, the casing 31 includes a stem 311 that is a base for mounting a thermopile element 33 on a middle part thereof, and a can 312 whose bottom side is fittingly joined to the stem 311. The stem 311 and the can 312 are made of metal, and their respective contact regions are subjected to metal joining. The infrared absorption structure 4 is made by forming an oxide film on an outer surface of the top surface of the can 31, except for the filter 32. Because the oxide film is formed on the outer surface of the can 31, a temperature gradient between the thermopile element 33 and the infrared absorption structure 4 can be made smaller than the case of disposing the infrared absorption plate. The temperature drift or the like is therefore much less likely to occur, thus leading to improved measurement accuracy.

Mirror finish is applied to the reflection structure 5 in the second embodiment, except for a region in the sensor-side space S2 which is subjected to the blackening treatment.

Similarly to the first embodiment, the infrared absorption structure 4 and the reflection structure 5 in the second embodiment also contribute to preventing self-infrared rays IR from entering the infrared sensor 3, thereby reducing temperature drift, noise, and the like in measured temperatures.

Other embodiments are described below.

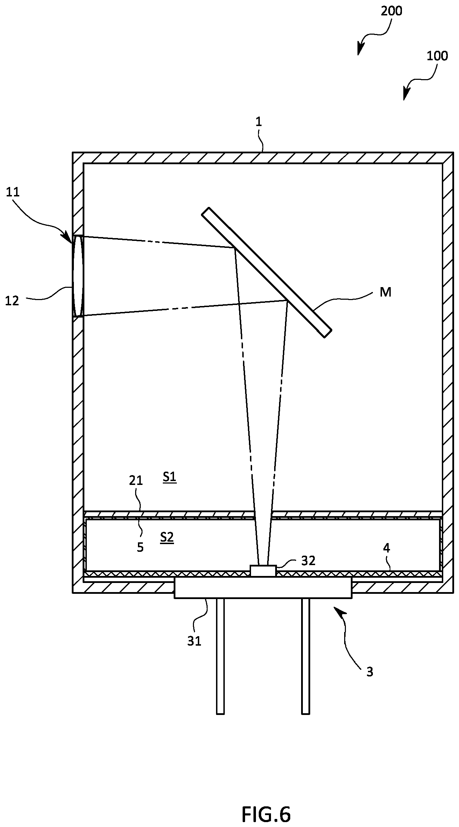

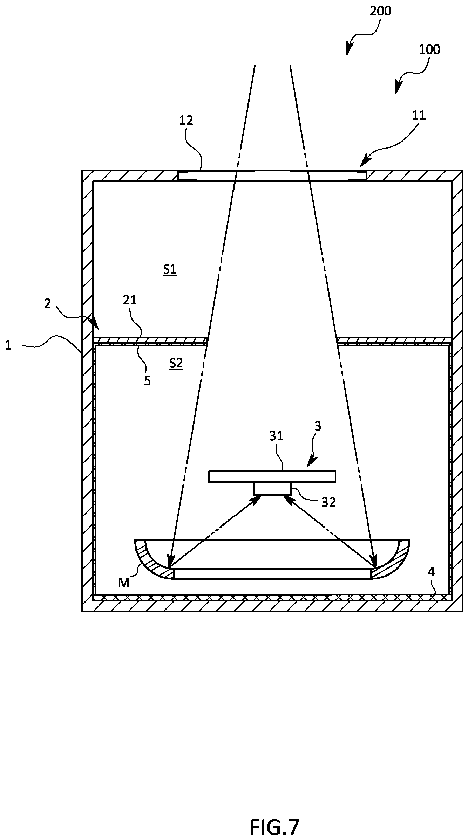

Arrangements of the infrared inlet port 11 and the infrared sensor 3 with respect to the barrel 1 are not limited to those in the above embodiments. For example, as illustrated in FIGs. 6 and 7, a mirror M may be disposed in the barrel 1, and infrared rays entering from the infrared inlet port 11 may be allowed to enter the infrared sensor 3 by being reflected from the mirror M. Even with this case, a first aperture 21 is disposed on an optical path extending to the infrared inlet port 11, the mirror M, and the infrared sensor 3 in order to divide the interior of the barrel 1 into a front end side on which the infrared inlet port 11 is located, and a base end side in which the infrared sensor 3 is accommodated. Similarly to the above embodiment, it is possible to prevent self-infrared rays IR from entering the infrared sensor 3 by forming the infrared absorption structure 4 on at least an inner end surface on the base end side.

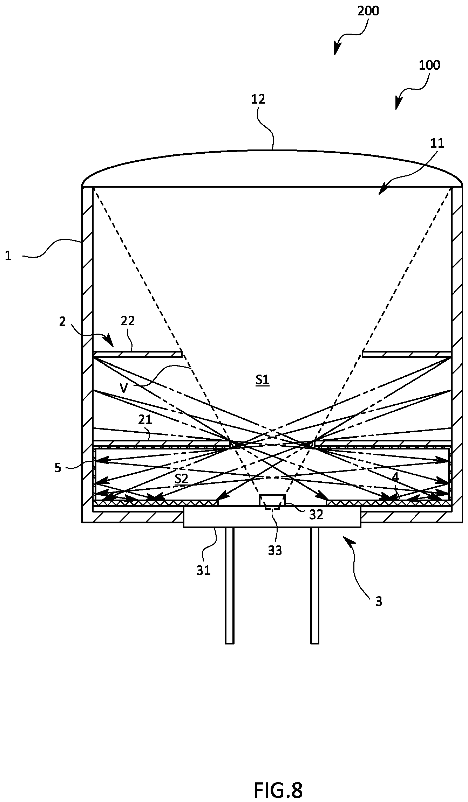

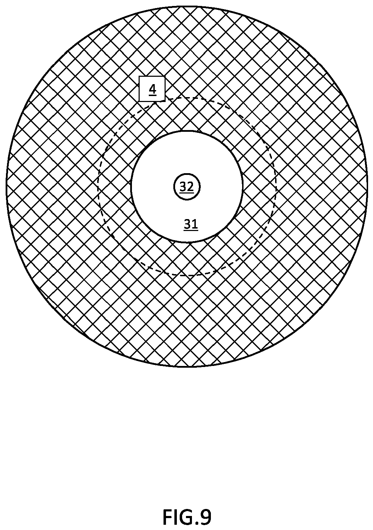

The infrared absorption structure needs to be disposed to cover at least a position in which self-infrared rays generated in an inlet port-side space can firstly enter a sensor-side space. Specifically, the infrared absorption structure needs to be disposed at a position to ensure that infrared rays radiated from a front end side than the first aperture in the barrel passes through the first aperture and reach the inner end surface on the base end side in the barrel or the outer surface of the infrared sensor. For example, as illustrated in FIG. 8, imaginary straight lines are drawn radially from individual points on a wall surface of the inlet port-side space S1, and the infrared absorption structure 4 may be disposed in a region in which the infrared rays pass through an opening of the first aperture 21 and are projected on a top surface of the infrared sensor 3 or the inner end surface on the base end side of the barrel 1. In this case, as illustrated in FIG. 9 that is a diagram when the inner end surface on the base end side of the barrel 1 is viewed from above, the infrared absorption structure 4 may not be disposed around the optical filter 32 on an inner peripheral side on the top surface of the infrared sensor 3, and the infrared absorption structure 4 may be disposed only at a position on an outer peripheral part of the top surface to which the self-infrared rays are reachable. Alternatively, the infrared absorption structure may be formed by bringing an inner peripheral surface of the barrel, a part of the first aperture, or a part of the infrared sensor into a rough surface with low reflectance in which infrared absorption occurs.

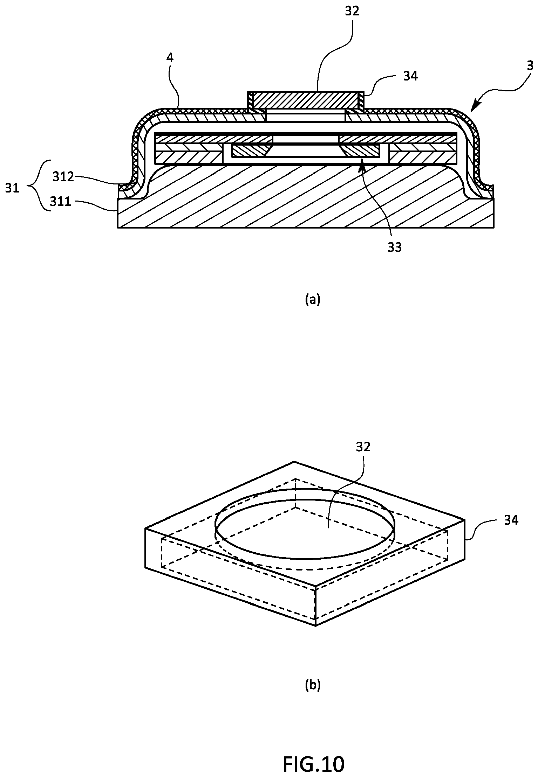

The optical filter 32 of the infrared sensor 3 is made into a thin plate shape. Alternatively, as illustrated in FIG. 10(a) that is a sectional view of the infrared sensor 3, and FIG. 10(b) that is a perspective view when the optical filter 33 is viewed from a rear surface side, a part of the optical filter 32 which is attached to the can 312 on the rear surface, and a side surface of the optical filter 32 may be covered with a metal film 34. For example, when an infrared generation source that generates infrared rays having a higher energy than a measurement object is present beyond a field of view V of the infrared sensor 3, there is a probability that infrared rays emitted from the infrared generation source enter the barrel 1, and the infrared rays reach the side surface of the optical filter 32 by being reflected in the barrel 1 along with attenuation even in the presence of the infrared absorption structure 4. In this case, because the infrared rays do not pass through from the surface of the optical filter 32 to the rear surface thereof, sufficient bandpass effect is not attainable, resulting in occurrence of a measurement error. The embodiment illustrated in FIG. 10 is designed to dispose the metal film 34 on the side surface of the optical filter 33 or the like. This prevents entry of the infrared rays except for entry from the surface of the optical filter 33, in order to prevent infrared rays with high energy beyond the field of view from entering the thermopile 33. Consequently, the measurement error is less likely to occur. With this configuration, even in a situation in which a semiconductor wafer is heated by a halogen lamp disposed in the vicinity of the semiconductor wafer and only the semiconductor wafer as a temperature measurement object is present in the field of view V, it becomes possible to accurately measure a temperature of the semiconductor wafer without being affected by infrared rays with high energy generated from the halogen lamp.

Alternatively, the infrared absorption structure may be disposed at a position to ensure that infrared rays radiated from individual points on a side of the second aperture which is located toward the infrared sensor pass through the opening of the first aperture and reach the inner end surface on the base end side in the barrel or the outer surface of the infrared sensor.

Still alternatively, generation of self-infrared rays may be eliminated by disposing the reflection structure at a portion of the inner end surface on the base end side of the barrel which is not provided with the infrared absorption structure.

Additionally, instead of forming the reflection structure as in the case of the above embodiments, the reflection structure needs to be disposed on at least a part of the inner peripheral surface of the barrel in the sensor-side space, or at least a part of a surface of the first aperture which is located toward the infrared sensor.

The apertures constituting the aperture structure are not limited to ones which are disposed vertically relative to the axial direction of the barrel. For example, the apertures may be disposed obliquely relative to the axial direction. Position and orientation of each of the apertures need to be set according to an optical path of infrared rays from a measurement object in the barrel so as to limit the field of view of the infrared sensor to a predetermined range.

The infrared detector according to the present invention may be used for constituting a variety of devices instead of constituting the radiation thermometer. For example, an infrared switch may be configured depending on the presence or absence of an output signal from the infrared detector, or whether or not the output signal exceeds a threshold value. Alternatively, an infrared spectrometer may be configured using a prism and the infrared detector, or an NDIR using the infrared spectrometer may be configured.

Other various modifications and combinations of the embodiments may be made without departing from the spirit and scope of the present invention.

### Industrial Applicability

The radiation thermometer using the infrared detector according to the present invention is capable of reducing temperature drift even when the temperature of the infrared detector itself varies due to temperature variations in ambient environment and infrared action from a measurement object. It is therefore possible to provide the radiation thermometer capable of carrying out highly accurate temperature measurement in an environment in which it is difficult to keep the temperature of the infrared detector itself constant.

## Claims

1. An infrared detector comprising:
a barrel comprising an infrared inlet port formed on a front end side;
a first aperture disposed so as to divide an interior of the barrel into the front end side and a base end side;
an infrared sensor disposed on the base end side than the first aperture in the barrel;
an infrared absorption structure disposed on at least a part of an inner end surface on the base end side in the barrel or at least a part of an outer surface of the infrared sensor; and
a reflection structure disposed on at least a part of an inner peripheral surface on the base end side than the first aperture in the barrel or at least a part of a side of the first aperture which is located toward the infrared sensor.

2. The infrared detector according to claim 1, wherein the infrared absorption structure is disposed at a position to ensure that infrared rays radiated from a front end side than the first aperture in the barrel pass through the first aperture and reach an inner end surface on the base end side in the barrel or an outer surface of the infrared sensor.

3. The infrared detector according to claim 1 or 2, further comprising a second aperture disposed so as to divide between the infrared inlet port and the first aperture in the interior of the barrel.

4. The infrared detector according to claim 3, wherein the infrared absorption structure is disposed at a position to ensure that infrared rays radiated from individual points on a side of the second aperture which is located toward the infrared sensor pass through an opening of the first aperture and reach an inner end surface on the base end side in the barrel or an outer surface of the infrared sensor.

5. The infrared detector according to any one of claims 1 to 4, wherein an inner peripheral surface on the front end side than the first aperture in the barrel is subjected to a surface treatment so as to absorb infrared rays.

6. The infrared detector according to any one of claims 1 to 5, wherein the infrared absorption structure is a black infrared absorption plate to cover an inner end surface on the base end side in the barrel or an outer surface of the infrared sensor.

7. The infrared detector according to any one of claims 1 to 5, wherein the infrared absorption structure is made by applying a blackening treatment to an inner end surface on the base end side in the barrel or an outer surface of the infrared sensor.

8. The infrared detector according to any one of claims 1 to 7, wherein the reflection structure is a reflection film formed on an inner peripheral surface on the base end side than the first aperture in the barrel or on a side of the first aperture which is located toward the infrared sensor.

9. The infrared detector according to any one of claims 1 to 7, wherein the reflection structure is made by applying mirror finish to an inner peripheral surface on the base end side than the first aperture in the barrel or to a side of the first aperture which is located toward the infrared sensor.

10. The infrared detector according to any one of claims 1 to 9, wherein the infrared sensor comprises:
a thermopile element;
a casing designed to accommodate the thermopile element therein; and
a plate-shaped optical filter disposed so as to cover an opening formed in the casing and designed to permit passage of infrared rays in a predetermined wavelength range, wherein
a side surface of the optical filter is covered with a metal film.

11. A radiation thermometer comprising:
the infrared detector according to any one of claims 1 to 10; and
a temperature calculation section designed to calculate a temperature on a basis of an electrical signal outputted from the infrared sensor.
